# EUROPEAN PATENT APPLICATION

(11) **EP 3 213 928 A1**
(43) Date of publication of application: **06.09.2017**
(21) Application number: 16818325.9
(22) Date of filing: 05.08.2016
(51) Int. Cl.: B44C 5/00, B29C 45/14, B29C 45/26

(54) **METHOD FOR MANUFACTURING DECORATIVE-ARTISTIC ARTICLES**

(30) Priority: 30.06.2015 RU 2015126139
(71) Applicant: Litnitskii, Iurii Ivanovich, Yaroslavskii Raion 150025 (RU)
(72) Inventor: Litnitskii, Iurii Ivanovich, Yaroslavskii Raion 150025 (RU)
(74) Representative: Jeck, Anton
(86) International application number: PCT/RU2016/000512
(87) International publication number: WO 2017/003323

(57) **Abstract**

A method for manufacturing decorative-artistic articles from a fluid self-hardening material, in which a casting mould consisting of two dies is pre-manufactured, a lining material is placed into at least one of the dies, the space between the lining material and the working surface of the die is evacuated, the die is closed, after which the fluid self-hardening material is cast, wherein, before the lining material is placed into at least one of the dies, said material is pre-shaped by a punch in a thermal vacuum press, and the cavity between the dies is evacuated before the self-hardening material is cast. The technical results of the article include the production of an article from a fluid self-hardening material which is covered with a lining material, without creases and without loss of the material pattern, with good decorative properties and with an aesthetic external appearance, of any profile, without the formation of internal voids and casting defects, and not requiring additional processing of the surface; and a reduction in labour costs and costs of production.

## Description

### Technical field

The invention is related to a method to manufacture decorative-artistic (voluminous) articles, which may be used in the furniture production, for example, as a piece of furniture or a frontispiece; for inter-room doors, for framing doorways, as well as for interior decorations; and in decorative panels.

### Previous technical level

From a technical level, there is a known method to manufacture decorative-artistic articles (patent RU 2540061, published on January 27, 2015), for which 2 molding forms are prepared, at least one mold gets filled with a fluid self-hardening material, molds are joined with each other to create a shape of the finished article, the stated material is maintained in the closed mold within some time sufficient for its hardening, and the shaped article is extracted, while one insert is preliminary placed within at least one of the molds, ensuring a potential contact of the finished article surface with any other surface.

A deficiency of this method is that after extracting an article from the mold, the article has a white or yellow tint, which requires an additional process to improve aesthetics, such as an addition of a colorant or applying a finishing coating to the article surface, which requires additional production areas and significant labor costs.

The closest similar method to the proposed one is a method to manufacture voluminous decorative articles (patent RU 2412063, published on February 20, 2011), where an estimated volume of liquid polyurethane foam is pumped into a previously prepared matrix with a defined shape, whose internal surface is coated by a separating material, then the matrix is covered by a panel, 5 - 20 minutes later, a semi-finished product is extracted from the matrix, and molding defects are eliminated and the product is completely dried, and then it is given an aesthetic look by covering it with PVC tape, or by applying a finish, paint, etc.

A deficiency of this method is that it requires an elimination of molding defects, as well as applying an aesthetic finish to the article by applying paint or PVC tape, which requires additional time, labor cost and production areas.

### Invention description

The technical task of the proposed invention is to obtain an article made from a fluid self-hardening material, coated with a lining material, without creases and no loss of material pattern, with good decorative properties, without any internal voids and molding defects, not requiring additional surface processing; and reducing labor and article costs.

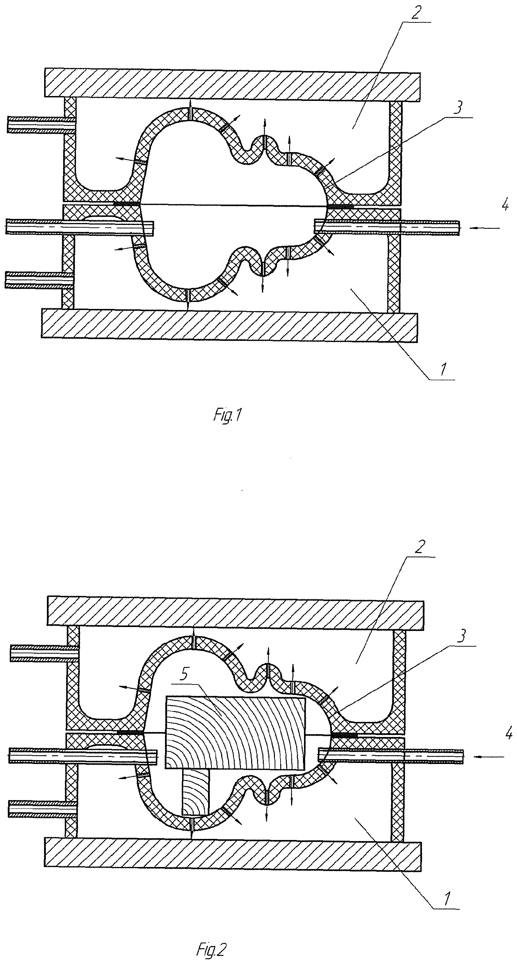

In one of the options of implementing the invention of the proposed method is to preliminarily make a mold, consisting of two matrices. At least one of the matrices is coated with a lining material, and the matrix is preliminarily molded by a puncheon of the suck-down press; the air of the space between the lining material and the working surface of the matrix is pumped out, matrices are joined to each other, the air between these matrices is pumped out, and then a liquid self-hardening material is pumped in (Fig. 1). The article is held in place until the material is fully hardened, then it is extracted from the matrix, and, if necessary, an excess of the lining material is cut away.

Preferably, one of the following could be used as a self-hardening material: polyurethane, polyurethane foam, acrylic resin, epoxy resin, or polyether resin.

One of the following films could be used as a lining material: polyethylene phthalate, PVC, polystyrene, polypropylene, or polyethylene.

The achieved technical result ensures the improved quality of the manufactured article, which do not require additional processing and have a good aesthetic and decorative look, as well as a reduction in the manufacturing cost of the article.

According to another option, a housing is placed inside the matrix prior to being filled with a self-hardening material. The housing has a function of a load-bearing construction, as well as (if required) it could fill the volume of the article, which reduces manufacturing costs. The following materials could be used for the housing: wood, metal, plastics, composites, or wood-fibrous materials.

For the third option, at least one insert is placed inside the matrix prior to being filled with a self-hardening material, ensuring a potential contact of the finished article with any other surface. The following materials could be used as an insert: wood, metal, plastics, composites, or wood-fibrous materials.

### A brief description of drawings:

- Fig. 1: A mold with a liquid self-hardening material and a lining material in a closed position.
- Fig. 2: A mold with a housing within it.
- Fig. 3: A mold with inserts within it to fasten it to surfaces.
- Fig. 4: A finished article.

### Invention options

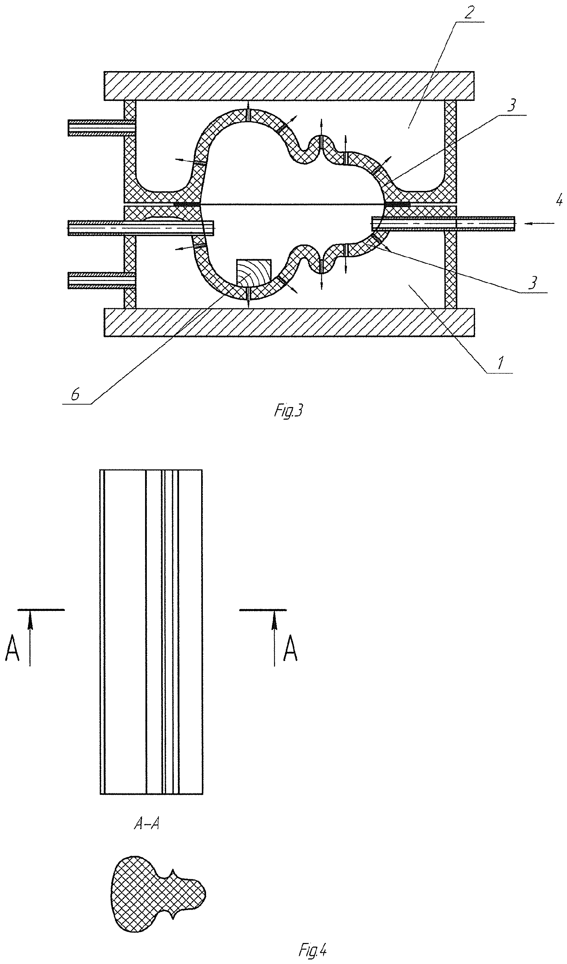

One of the options is to make banisters (a small ornate post in the shape of a column) (Fig. 4). This part could be made in any shape or size, in this case, the external surface of the banister shall be coated with PVC film, imitating marble.

The process of method implementation starts with a preliminarily prepared mold, consisting of two matrices. There are several types of materials to make this mold, in this example, the mold is made of fiberglass.

The lining material 3 (in this case, a PVC film, imitating marble, was used as a lining material), which was previously formed by a puncheon of the suck-down press. Then, the lining material 3 is applied to matrices 1 and 2, air between the working surface of the matrix and lining material 3 is pumped out to make the film lie evenly. In this option, a pre-made article housing 5 is placed inside matrix 1 (in this case, the housing is made of wood) (Fig.2). Matrices are joined together, air within the cavity between matrices is pumped out, then liquid self-hardening material 4 (in this case, it is polyurethane) is pumped in at a measured dose, using a filling machine, into matrix 1.

The proposed method yields a complex profile article (Fig. 4), and does not require additional processing to achieve an aesthetic look. A couple of banisters are made for this proposed method. The quality of components is good, the lining film adheres well to the article's surface, the article does not have any concavities (no internal voids), the film adheres well to component's surface. There are no creases or bends in the film, the pattern is not elongated or broken.

In another option, prior to pumping self-hardening material 4 into matrix 1, at least one insert 6 (Fig. 3) is placed inside the matrix, ensuring the contact of the finished article with any other surface. The insert ensures a potential fastening of the article to a solid surface, as well as fastening various pieces of furniture to it. The placement of inserts varies due to the volume of the article, their quantities and shapes, depending on their sizes and geometric configuration of the manufactured article; furthermore, inserts are positioned so to ensure the fastening of the finished article to another surface, or to fasten furniture pieces to it; also, these inserts could be fastened to the housing. The following materials, depending on product requirements, could be used for inserts: wood, metal, plastics, composites, or wood-fibrous materials.

### Industrial applicability

The proposed method may be implemented with known technical resources. Applicable matrices and puncheon could be made with technically known methods for molding and/or machining, the evacuation could be performed by known evacuation devices, the self-hardening material pumping could be performed by filling machines, while the lining material application could be performed by suck-down presses.

Thus, the proposed method ensures the technical effect, which is expressed in the yield of an article of any profile and random shape, with improved quality of the article, while not requiring additional surface finishing to obtain good decorative and aesthetic properties; reducing article manufacturing costs.

## Claims

1. A preformed mold is made, consisting of two matrices, at least one of the matrices is coated with a lining material, and the matrix is preliminarily molded by a puncheon of the suck-down press; the air of the space between the lining material and the working surface of the matrix is pumped out, matrices are joined to each other, the air between these matrices is pumped out, and then a liquid self-hardening material is pumped in.

2. A method per claim 1, differing by having a self-hardening material made of one of the following: polyurethane, polyurethane foam, acrylic resin, epoxy resin, or polyether resin.

3. A method per claim 1, differing by having a lining material made of one of the following: polyethylene phthalate, PVC, polystyrene, polypropylene, or polyethylene.

4. A method per claim 1, differing by having a housing placed inside the matrix prior to being filled with a self-hardening material:

5. A method per claim 4, differing by having a housing made of one of the following: wood, metal, plastics, composites, or wood-fibrous materials.

6. A method per claim 1 and 4, differing by having at least one insert placed inside the matrix, prior to being filled with a self-hardening material, ensuring a potential contact of an article with any other surface.

7. A method per claim 6, differing by having an insert made of one of the following: wood, metal, plastics, composites, or wood-fibrous materials.
